(19) Europäisches Patentamt
European Patent Office
Office européen des brevets

(11) Veröffentlichungsnummer: **0 417 826 A1**

# (12) EUROPÄISCHE PATENTANMELDUNG

(21) Anmeldenummer: **90202245.8**

(22) Anmeldetag: **21.08.90**

(51) Int. Cl.5: **C22C 1/09**, C04B 41/45

(30) Priorität: **09.09.89 DE 3930081**

(43) Veröffentlichungstag der Anmeldung:
**20.03.91 Patentblatt 91/12**

(84) Benannte Vertragsstaaten:
**AT DE ES FR GB IT SE**

(71) Anmelder: **METALLGESELLSCHAFT Aktiengesellschaft**
**Reuterweg 14**
**W-6000 Frankfurt am Main(DE)**

(72) Erfinder: **Schmid, Eberhard E., Dr.**
**Neuwiesenstrasse 22**
**W-8755 Alzenau(DE)**
Erfinder: **Neite, Günter, Dr.**
**Martinusstrasse 9**
**W-6350 Bad Nauheim(DE)**

## (54) Verfahren zur Herstellung eines pressgegossenen faserverstärkten Bauteils.

(57) Bei einem Verfahren zur Herstellung eines faserverstärkten Bauteils aus Aluminium-Silizium-Legierung mit wenigstens einem darin eingegossenen vorgeformten Körper aus keramischen Fasern wird nach Einlegen des Faserformkörpers und Einfüllen der Schmelze in das Formenwerkzeug durch gesteuerten Druckaufbau der Faserformkörper mit Schmelze penetriert und der Enddruck bis zur vollständigen Erstarrung der Schmelze aufrechterhalten.

Um einen deutlich niedrigeren Enddruck einstellen zu können, wird der Faserformkörper vor dem Einlegen in das Formenwerkzeug mit einer wäßrigen $CuSO_4$-Lösung getränkt, bei einer Temperatur von 60 bis 90 °C getrocknet, auf eine Temperatur von 500 bis 1200 °C erwärmt und die Schmelze unter einem Enddruck von 10 bis 100 bar zur Erstarrung gebracht.

Fig. 1

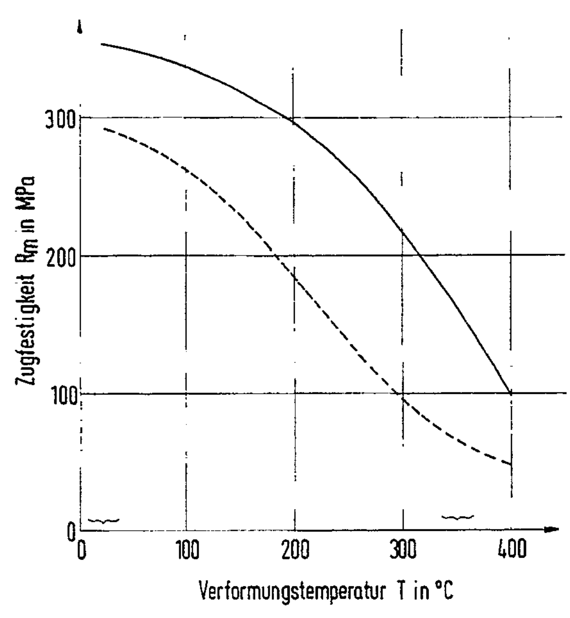


EP 0 417 826 A1

# VERFAHREN ZUR HERSTELLUNG EINES PRESSGEGOSSENEN FASERVERSTÄRKTEN BAUTEILS

Die Erfindung betrifft ein Verfahren zur Herstellung eines preßgegossenen faserverstärkten Bauteils aus Aluminium-Silizium-Legierung mit wenigstens einem darin eingegossenen vorgeformten Körper aus keramischen, 20 bis 300 µm, vorzugsweise 60 bis 150 µm, langen und einen mittleren Durchmesser von 3 um aufweisenden Fasern, deren Anteil bezogen auf die penetrierte Matrix 5 bis 30 Vol.-% beträgt und deren Orientierung parallel zu einer gewählten Ebene, in der die Fasern jedoch statistisch regellos orientiert sind, verläuft, sowie ein nach dem Verfahren hergestelltes Bauteil und die Verwendung dieses Bauteils.

Zur Steigerung der Festigkeit von aus Aluminium-Silizium-Legierungen gegossenen Bauteilen ist es bekannt, beim Gießen die Schmelze mit einem beliebig einstellbaren Druck in das Formenwerkzeug zu füllen und anschließend unter hohem Druck von über 1000 bar zur Erstarrung zu bringen. Infolge der dadurch bedingten höheren Erstarrungsgeschwindigkeit ergibt sich ein feines Erstarrungsgefüge mit Erhöhung des Anteils an Korngrenzenverfestigung. Durch die sehr gute Dichtspeisung können auch hochfeste Legierungen mit schlechter Gießbarkeit eingesetzt werden. Feines Erstarrungsgefüge verbessert erfahrungsgemäß bei Aluminium-Silizium-Legierungen die Temperaturwechselbeständigkeit. Bei Raumtemperatur beträgt die Schwingfestigkeitszunahme von durch Preßgießen einer Aluminiumlegierung des Typs AlSi12CuNiMg erzeugten Bauteile 20 bis 30 % gegenüber Bauteilen, die nach dem herkömmlichen Kokillen-Gießverfahren hergestellt wurden.

Das Preßgießen eignet sich auch zur Herstellung von faserverstärkten Bauteilen aus Aluminium-Silizium-Legierungen, indem vorgeformte Körper aus keramischen Fasern, deren Länge 20 bis 300 µm und deren mittlere Durchmesser etwa 3 µm betragen, in das Formenwerkzeug eingelegt, die Schmelze in das Formenwerkzeug eingefüllt und durch einen gesteuerten Druckaufbau der Faserkörper fit Schmelze penetriert werden. Der Enddruck von mehr als 1000 bar bringt die Schmelze und die Fasern auf atomaren Abstand, so daß es zu der für eine gute Bindung von Fasern und Matrix notwendigen Reaktion kommt. Die Fasern sind parallel zu einer Ebene ausgerichtet, innerhalb dieser Ebene ist die Orientierung statistisch regellos. Entsprechend der Mischungsregel ergibt sich durch die Faserverstärkung sowohl eine Erhöhung der Festigkeit als auch ein Anstieg im E-Modul. Mit zunehmender Temperatur wird der Festigkeitsunterschied zwischen faserfreien und faserverstärkten Bauteilen immer größer, da sich die Festigkeit der Fasern bis zum Schmelzpunkt der Matrix kaum verändert. Ab etwa 300 °C ergeben sich beispielsweise für die faserverstärkte Aluminium-Silizium-Legierung des Typs AlSi12CuNiMg Festigkeitssteigerungen von mehr als 100 % im Vergleich zu Standardbauteilen. Ebenso verdoppelt sich die Wechselfestigkeit gegenüber derjenigen bei Raumtemperatur. Die Temperaturwechselbeständigkeit, die bereits durch ein preßgegossenes feines Gefüge verbessert wird, wird durch die Faserverstärkung nochmals deutlich gesteigert.

Die unter hohem Druck von über 1000 bar durchgeführte Erstarrung faserverstärkter Bauteile ist jedoch mit einem vergleichsweise hohen Herstellungsaufwand verbunden, da die erheblichen Drücke besondere Armierungen erforderlich machen und relativ großflächigere Faserformkörper deformieren können.

Aufgabe der vorliegenden Erfindung ist es deshalb, das eingangs beschriebene Verfahren so zu modifizieren, daß die in das Formenwerkzeug gefüllte Schmelze unter deutlich niedrigerem Enddruck zur Erstarrung gebracht werden kann, ohne daß jedoch die guten mechanischen und physikalischen Kennwerte der mit einem Druck von 1000 bar und mehr zur Erstarrung gebrachten faserverstärkten Bauteile verschlechtert werden.

Gelöst ist diese Aufgabe dadurch, daß der Faserformkörper vor dem Einlegen in das Formenwerkzeug mit einer wäßrigen $CuSO_4$-Lösung getränkt, bei einer Temperatur von 60 bis 90 °C getrocknet, auf eine Temperatur von 500 bis 1200 °C, vorzugsweise 850 bis 1000 °C, erwärmt wird und die Schmelze unter einem Enddruck von 10 bis 100 bar zur Erstarrung gebracht wird. Durch die erfindungsgemäßen Maßnahmen werden verbesserte Kennwerte für die Duktilität, die Bruchspannung und die Festigkeiten, insbesondere bei höheren Einsatztemperaturen, erzielt.

Für die Durchführung des erfindungsgemäßen Verfahrens haben sich Faserformkörper als besonders geeignet erwiesen, deren Fasern aus Oxidkeramik auf der Basis von Aluminium, Magnesium, Silizium, Zirkonium oder Titan bestehen.

Im Rahmen der Ausgestaltung der Erfindung ist es möglich, daß die $CuSO_4$-Lösung ganz oder teilweise durch $Cu(NO_3)_2$-Lösung ersetzt wird. Das nach dem Verfahren hergestellte Bauteil ist erfindungsgemäß dadurch charakterisiert, daß zwischen den Fasern und der sie umgebenden Matrix eine dünne Übergangsschicht mit einer Dicke einer Monolage bis 1,0 µm, vorzugsweise 0,05 bis 0,5 µm, aus Kupfer(II)-Oxid, Kupfer(I)-Oxid und/oder einem Mischoxid dieser Oxide vorhanden ist. Diese Übergangsschicht kann partiell bei der Penetration des Faserformkörpers mit Schmelze herausgelöst werden, ohne daß dadurch die mit dem erf indungsgemäßen Verfahren erzielten Vorteile beeinträchtigt werden.

Vorteilhafterweise läßt sich das nach dem erfindungsgemäßen Verfahren hergestellte Bauteil für die Brennraumwände von Verbrennungskraftmaschinen, insbesondere für Kolben, vorzugsweise an deren Kolbenboden, Ringfeld, Bolzennaben und Kolbenschaft, einsetzen.

Die mit den erfindungsgemäßen Maßnahmen erzielten Vorteile werden im folgenden näher und beispielhaft erläutert.

Es wurden mehrere faserverstärkte Ronden aus der Aluminium-Silizium-Legierung des Typs AlSi12CuNiMg mit einem darin eingebetteten Faserformkörper mit einem Anteil von etwa 20 Vol.-% $Al_2O_3$-Fasern mit einem mittleren Durchmesser von 3 um und einer Länge von 50 bis 300 µm preßgegossen und unter einem Enddruck von 50 bar zur Erstarrung gebracht. Die Faserformkörper waren vor dem Einlegen in die Gießform mit einer C $uSO_4$-Lösung getränkt, bei 70° C getrocknet und bei 1000° C für die Dauer von 2 min gebrannt worden. Die Fasern lagen meist parallel zu der oberen und unteren Rondenfläche ausgerichtet, innerhalb dieser Ebene war die Orientierung statistisch regellos.

Diese faserverstärkten Proben wurden 2 Stunden lang bei 500° C wärmebehandelt, in Wasser abgeschreckt, bei Raumtemperatur ausgelagert, 5 Stunden lang bei 230° C warmausgelagert, an bewegter Luft abgekühlt und im einachsigen Zugversuch bei Raumtemperatur und bei 350° C verformt. Die an diesen Proben ermittelten Kennwerte der mechanischen Festigkeitseigenschaften wurden mit den entsprechenden Kennwerten von Proben verglichen, die zwar aus dem gleichen Verbundwerkstoff aufgebaut waren, jedoch im Unterschied zu dem erfindungsgemäß aufgebauten Verbundwerkstoff keine aus Kupferoxid bestehende Übergangsschicht zwischen der Matrix der Aluminium-Silizium-Legierung und den Fasern des Faserformkörpers aufwiesen. Der Vergleich zeigt, daß insbesondere die Zugfestigkeit (Fig. 1), die Umlaufbiegewechselfestigkeit (Fig. 2) und die Temperaturwechselfestigkeit (Fig. 3) Werte erreichen, die nahezu identisch sind mit den entsprechenden Kennwerten von solchen Proben, die im Unterschied zum erfindungsgemäßen Verbundwerkstoff keine Übergangsschicht aus Kupferoxid zwischen den Fasern und der sie umgebenden Matrix besitzen und durch Preßgießen mit einem Enddruck von 1200 bar hergestellt worden sind. Zur Beurteilung der Temperaturwechselbeständigkeit wurden die Proben jeweils 6000 mal innerhalb von 15,5 s mittels einer Gasflamme von Raumtemperatur auf 350° C erhitzt, anschließend 15,5 s lang durch Anblasen mit Luft abgekühlt, dann 15,5 s lang in Wasser eingetaucht und danach 15,5 s lang mit Luft trokken geblasen. Maßgebend für die Beurteilung der Temperaturwechselbeständigkeit ist die Gesamtlänge der im Einwirkungsbereich der Gasflamme in einer kreisförmigen Fläche von 20 mm Durchmesser auftretenden Risse. Die Kennwerte für den E-Modul, die 0,05 %Dehngrenze und die Bruchspannung konnten insbesondere im Bereich erhöhter Temperatur verbessert werden. Fig. 4 und 5 zeigen rasterelektronenmikroskopische Aufnahmen von mit $CuSO_4$ behandelten und anschließend bei 1000° C wärmebehandelten Faserformkörpern. Am Randbereich der Probe weisen die Fasern einen körnigen rauhen (Fig. 4) und in der Probenmitte dagegen einen glatten Kupferbelag (Fig. 5) auf.

## Ansprüche

1. Verfahren zur Herstellung eines selektiv faserverstärkten Bauteils aus Aluminium-Silizium-Legierung mit wenigstens einem darin eingegossenen vorgeformten Körper aus keramischen Fasern, deren Anteil bezogen auf die penetrierte Matrix 5 bis 30 Vol.-% beträgt und deren Orientierung parallel zu einer gewählten Ebene, in der die Fasern jedoch statistisch regellos orientiert sind, verläuft und nach Einlegen des Faserformkörpers und Einfüllen der Schmelze in das Formenwerkzeug durch gesteuerten Druckaufbau der Faserformkörper mit Schmelze penetriert und der Enddruck bis zur vollständigen Erstarrung der Schmelze aufrechterhalten wird, dadurch gekennzeichnet, daß der Faserformkörper vor dem Einlegen in das Formenwerkzeug mit einer wäßrigen $CuSO_4$-Lösung getränkt, bei einer Temperatur von 60 bis 90° C getrocknet, auf eine Temperatur von 500 bis 1200° C erwärmt und die Schmelze unter einem Enddruck von 10 bis 100 bar zur Erstarrung gebracht wird.

2. Verfahren nach Anspruch 1, dadurch gekennzeichnet, daß der getränkte und getrocknete Faserformkörper auf eine Temperatur von 850 bis 1000° C erwärmt wird.

3. Verfahren nach den Ansprüchen 1 und 2, dadurch gekennzeichnet, daß der Faserformkörper aus Fasern aus Oxidkeramik auf der Basis von Aluminium, Magnesium, Silizium, Zirkonium oder Titan besteht.

4. Verfahren nach den Ansprüchen 1 bis 3, dadurch gekennzeichnet, daß die $CuSO_4$-Lösung ganz oder teilweise durch $Cu(NO_3)_2$-Lösung ersetzt wird.

5. Bauteil nach dem Verfahren gemäß der Ansprüche 1 bis 4, dadurch gekennzeichnet, daß ganz oder teilweise zwischen den Fasern und der sie umgebenden Matrix eine dünne Übergangsschicht mit einer Dicke einer Monolage bis 1,0 µm, vorzugsweise 0,05 bis 0,5 µm, aus Kupfer(II)-Oxid, Kupfer(I)-Oxid und/oder einem Mischoxid dieser Oxide besteht.

6. Verwendung des Bauteils nach Anspruch 5 für Brennraumwände von Verbrennungskraftmaschinen, insbesondere für Kolben, vorzugsweise am Kolbenboden, Ringfeld, Bolzennaben und Kolbenschaft.

Fig. 1

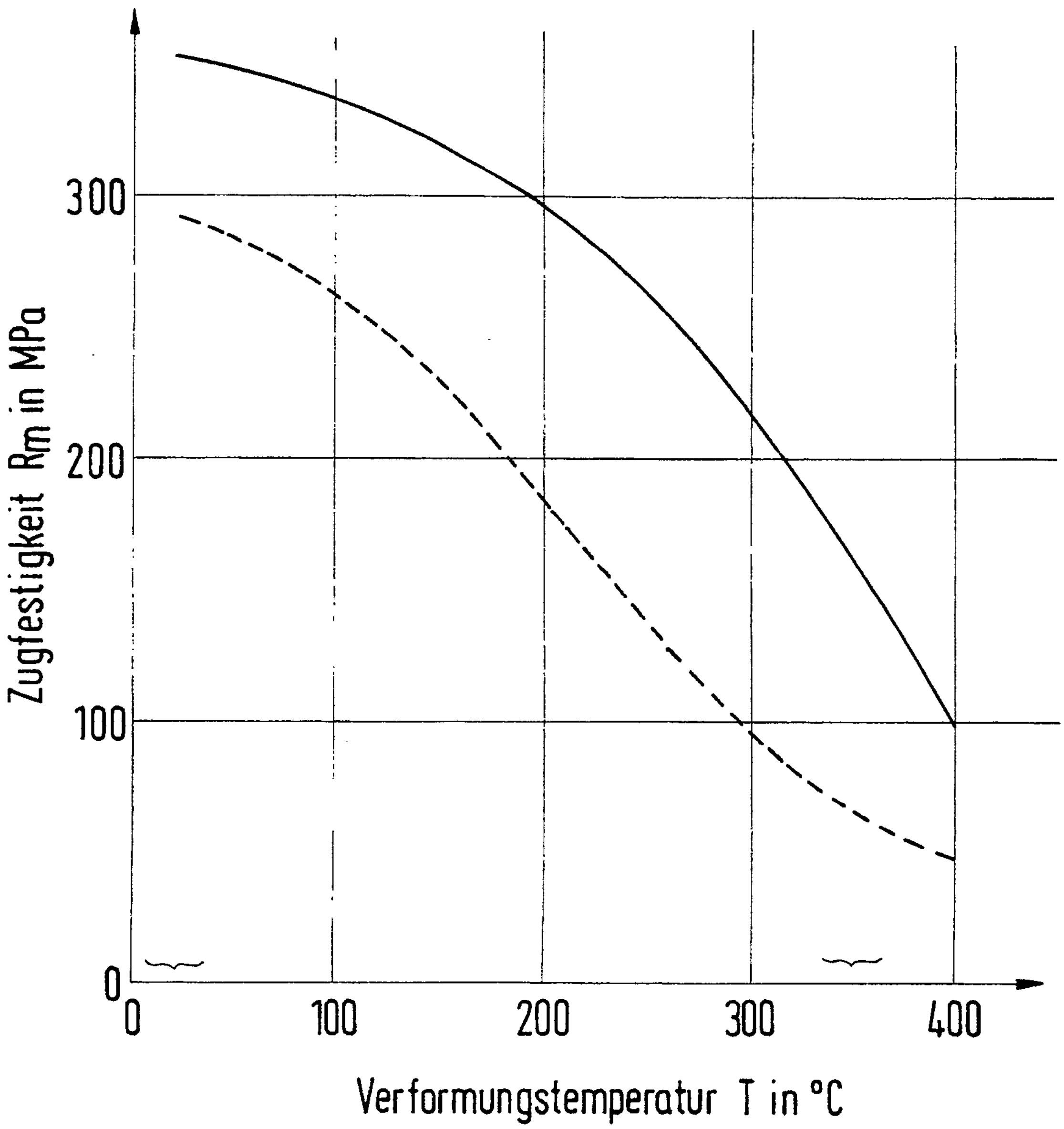
300
200
100
0
Zugfestigkeit $R_m$ in MPa
0
100
200
300
400
Verformungstemperatur T in °C

Fig. 2

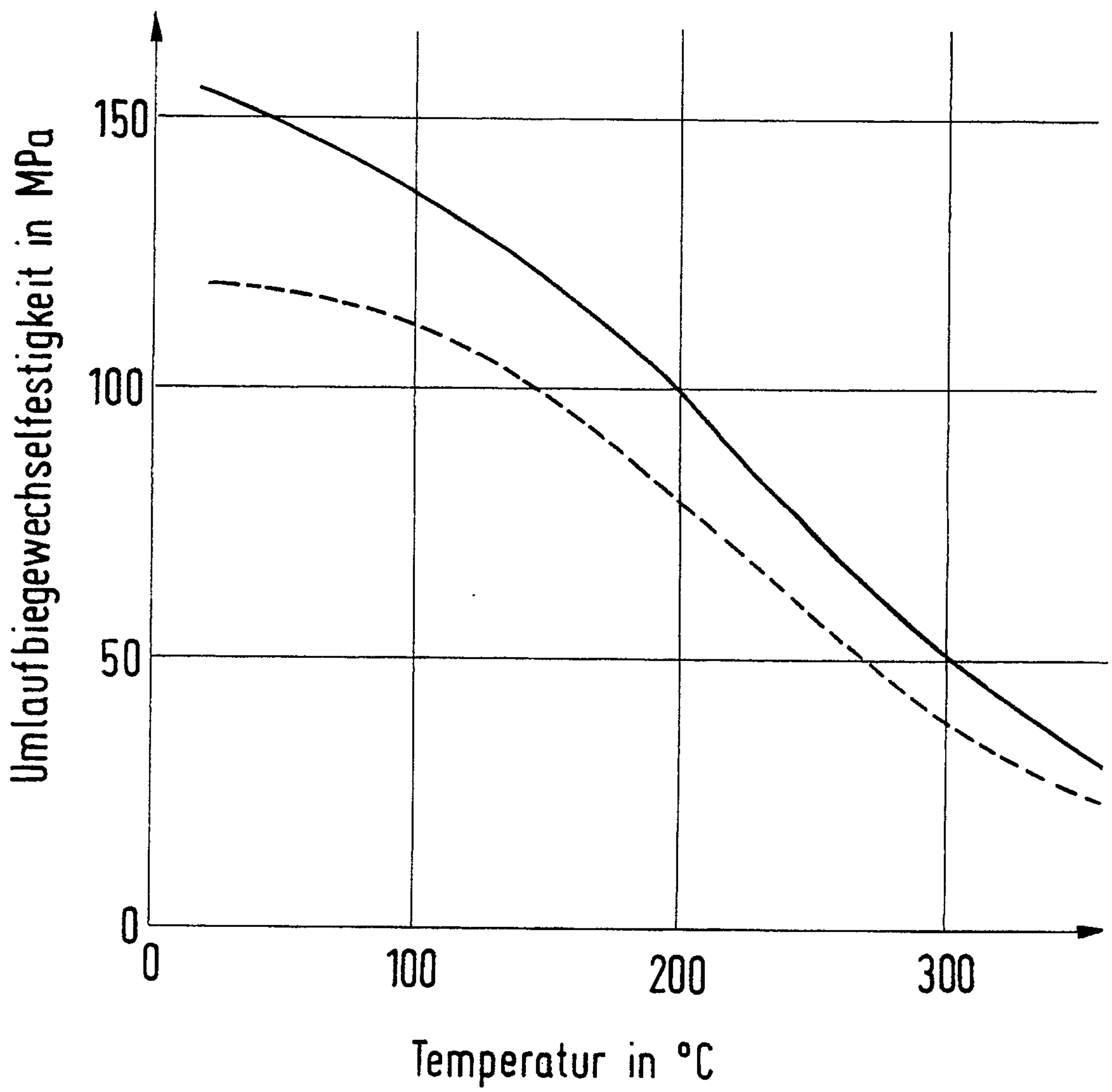
Umlaufbiegewechselfestigkeit in MPa
150
100
50
0
0
100
200
300
Temperatur in °C

Fig. 3

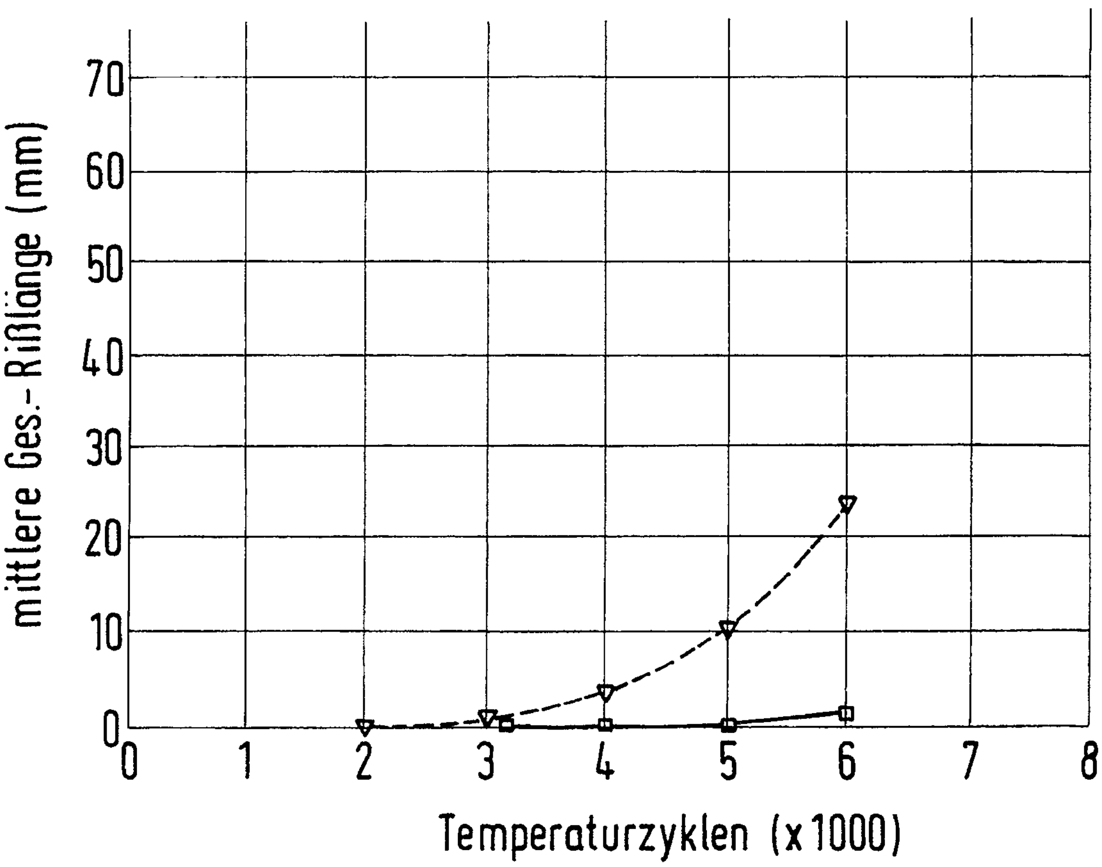
mittlere Ges.-Rißlänge (mm)
70
60
50
40
30
20
10
0
0
1
2
3
4
5
6
7
8
Temperaturzyklen (x1000)

Fig. 4

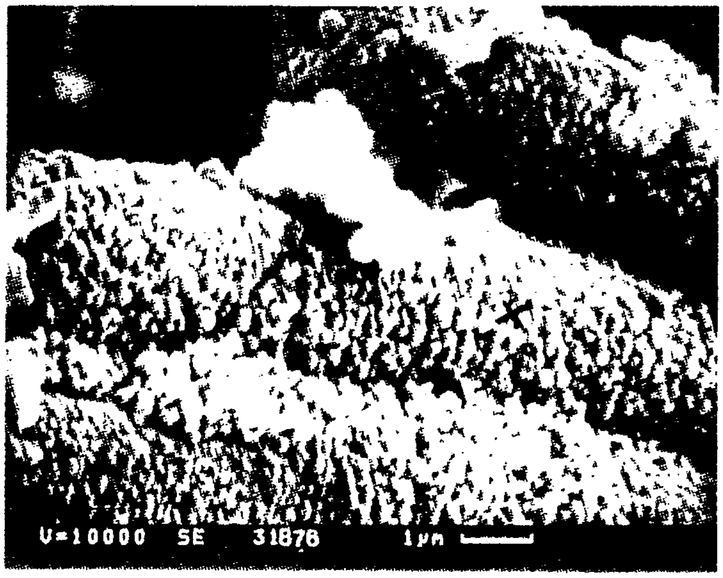


Fig. 5

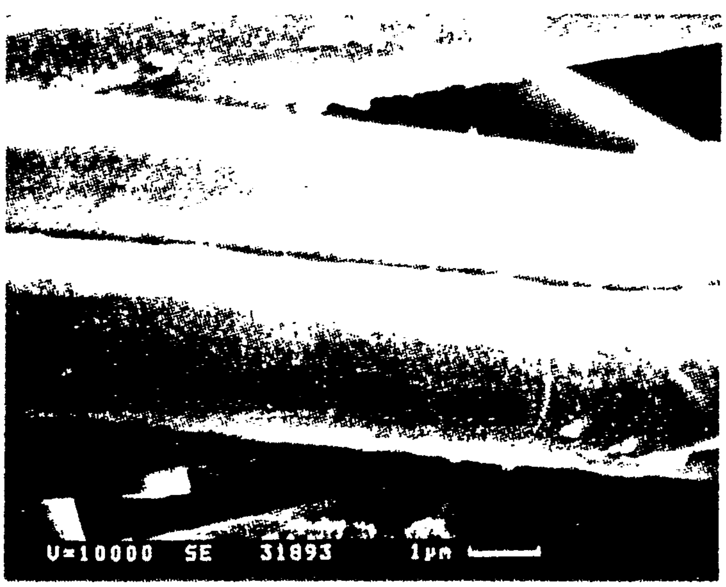

Europäisches
Patentamt

# EUROPÄISCHER RECHERCHENBERICHT

Nummer der Anmeldung

**EP 90 20 2245**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 312 295 (ALCAN INTERNATIONAL)<br>* Insgesamt *<br>– – – | 1 | C 22 C 1/09<br>C 04 B 41/45 |
| A | EP-A-0 188 704 (TOYOTA JIDOSHA K.K.)<br>* Ansprüche 1,2; Seite 17 *<br>– – – | 1 | |
| A | EP-A-0 221 764 (SULLIVAN MINING CORP.)<br>* Zusammenfassung *<br>– – – – – | 1 | |
| | | | **RECHERCHIERTE SACHGEBIETE (Int. Cl.5)** |
| | | | C 22 C<br>C 04 B |

Der vorliegende Recherchenbericht wurde für alle Patentansprüche erstellt

| Recherchenort | Abschlußdatum der Recherche | Prüfer |
|---|---|---|
| Den Haag | 12 Dezember 90 | ASHLEY G.W. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument